(19) **Europäisches Patentamt**
**European Patent Office**
**Office européen des brevets**

(11) **EP 1 293 549 B1**

(12) **EUROPEAN PATENT SPECIFICATION**

(45) Date of publication and mention
of the grant of the patent:
**31.08.2005 Bulletin 2005/35**

(51) Int Cl.⁷: **C09J 163/00**, C09J 5/06,
D21G 1/02, F16C 13/00

(21) Application number: **01938596.2**

(22) Date of filing: **11.06.2001**

(86) International application number:
**PCT/JP2001/004922**

(87) International publication number:
**WO 2001/098428 (27.12.2001 Gazette 2001/52)**

(54) **ADHESIVE FOR RESIN ROLL ASSEMBLY AND RESIN ROLL**

KLEBSTOFF FÜR HARZROLLANORDNUNG UND HARZROLLER

PRODUIT ADHESIF POUR ENSEMBLE ROULEAU DE RESINE, ET ROULEAU DE RESINE

(84) Designated Contracting States:
**DE FI**

(30) Priority: **20.06.2000 JP 2000185061**
**24.04.2001 JP 2001125373**

(43) Date of publication of application:
**19.03.2003 Bulletin 2003/12**

(73) Proprietor: **Sanyo Chemical Industries, Ltd.**
**Kyoto-fu, 605-0995 (JP)**

(72) Inventors:
• **SAITO, Hideaki,**
**c/o Sanyo Chemical Industries, Ltd**
**Kyoto-shi, Kyoto 605-0995 (JP)**
• **HONDO, Fumiaki,**
**c/oSanyo Chemical Industries, Ltd.**
**Kyoto-shi, Kyoto 605-0995 (JP)**
• **MIYAZAKI, Kazutoshi,**
**Sanyo Chemical Industries Ltd**
**Kyoto-shi, Kyoto 605-0995 (JP)**

(74) Representative: **Reuther, Martin**
**Patentanwaltskanzlei Liermann-Castell,**
**Gutenbergstrasse 12**
**52349 Düren (DE)**

(56) References cited:
**JP-A- 1 260 092**        **JP-A- 58 176 211**
**JP-A- 59 058 023**

• **PATENT ABSTRACTS OF JAPAN vol. 0140, no. 17 (C-675), 16 January 1990 (1990-01-16) & JP 1 260092 A (YAMAUCHI CORP), 17 October 1989 (1989-10-17)**
• **PATENT ABSTRACTS OF JAPAN vol. 0080, no. 07 (C-204), 12 January 1984 (1984-01-12) & JP 58 176211 A (TOKYO SHIBAURA DENKI KK), 15 October 1983 (1983-10-15)**
• **PATENT ABSTRACTS OF JAPAN vol. 1998, no. 06, 30 April 1998 (1998-04-30) & JP 10 046006 A (SUNSTAR ENG INC), 17 February 1998 (1998-02-17)**
• **PATENT ABSTRACTS OF JAPAN vol. 1999, no. 02, 26 February 1999 (1999-02-26) & JP 10 292030 A (MITSUBISHI CHEM CORP), 4 November 1998 (1998-11-04)**
• **PATENT ABSTRACTS OF JAPAN vol. 1996, no. 07, 31 July 1996 (1996-07-31) & JP 8 067542 A (ASAHI CHEM IND CO LTD), 12 March 1996 (1996-03-12)**
• **PATENT ABSTRACTS OF JAPAN vol. 2000, no. 09, 13 October 2000 (2000-10-13) & JP 2000 154359 A (SEKISUI CHEM CO LTD), 6 June 2000 (2000-06-06)**
• **MASAKI SINPO: 'Epoxy Jushi Handbook', 25 December 1987, NIKKAN KOGYO SHINBUNSHA XP002946219 * page 135 - page 178 ***

## Description

### FIELD OF THE INVENTION

The invention relates to a resin roll, particularly to an adhesive for paper-manufacturing calendar roll assembly and a resin roll. Further in details, the invention relates to a thermosetting adhesive for a resin roll to be used in such a manner that the adhesive is injected into the space between a cylindrical object made of a resin and either a roll core or a fiber-reinforced underlayer formed by winding a fibrous material impregnated with a thermosetting resin on the outer periphery of a roll core and is then gradationally cured to unit them and to a resin roll.

### BACKGROUND ART

As described in Japanese Patent Application Laid-Open No. 1-260092, a method for manufacturing a resin roll in such a manner that an adhesive is injected into the space between a cylindrical object made of a resin and either a roll core or a fiber-reinforced underlayer formed by winding a fibrous material impregnated with a thermosetting resin on the outer periphery of a roll core and is then gradationally cured to unit them, comprises steps of forming the fiber-reinforced underlayer by winding a fibrous material impregnated with a thermosetting resin on the outer periphery of a roll core made of a metal; forming a cylinder object for an outer layer by injecting a raw material of a thermosetting resin into a mold for molding the cylindrical object with a prescribed size and curing it at a prescribed temperature other than the foregoing step; fitting the cylindrical object for the outer layer on the roll core made of a metal having the fiber-reinforced underlayer, injecting an adhesive with a low viscosity into the circular gap part formed between the underlayer and the cylindrical object, and curing the adhesive at a prescribed temperature to stick and unit the underlayer and the cylindrical object through the adhesive layer.

In this case, an epoxy resin, an unsaturated polyester resin, and the like are used as the thermosetting adhesive. Recently, along with the speed up and functional improvement of calendaring process, high heat resistance and high nip pressure resistance are required for a resin roll and an adhesive is also required to have properties corresponding to these requirements. An epoxy resin-based adhesive using an aromatic amine as a curing agent has been used as the adhesive for a resin roll.

However, since above-mentioned aromatic amine type epoxy resin adhesive requires a high temperature to be cured, expansion and strain of a cylindrical object made of a resin become significant at the time of curing the adhesive to result in cracking and damaging at the time of running a roll. Further, since the viscosity is high, it is extremely difficult to inject the adhesive in a gap of several millimeters at a low temperature. Inventors of the invention have enthusiastically investigated to solve the above-mentioned problems and consequently have achieved this invention.

The invention aims to provide an adhesive for resin roll assembly with excellent curing property. Another purpose of the invention is to provide a resin roll excellent in the properties of a cured product.

### SUMMARY OF THE INVENTION

The invention provides an adhesive for resin roll assembly which is to be used in such a manner that the adhesive is injected into the space between a cylindrical object made of a resin and either a roll core or a fiber-reinforced underlayer formed by winding a fibrous material impregnated with a thermosetting resin on the outer periphery of a roll core, and is then gradationally cured to unit the cylindrical object to the roll core or the underlayer, and which comprises an epoxy resin (a) and one or more amine based curing agents (b) selected from a group <u>consisting of alicyclic polyamines, heterocyclic polyamines,</u> polyamide-polyamines having a number average molecular weight of 800 or lower, polyether polyamines having a number average molecular weight of 1,000 or lower, and cyanoethylated polyamines. The invention also provides a resin roll obtained using the adhesive.

### DETAILED DESCRIPTION OF THE INVENTION

(Adhesive for resin roll assembly)

A method for manufacturing a resin roll using an adhesive for resin roll assembly of the invention comprises;

(1) a step of forming a fiber-reinforced underlayer by winding a fibrous material impregnated with a thermosetting resin on the outer periphery of a roll core;
(2) a step of forming a cylinder object for an outer layer by injecting a raw material of a thermosetting resin into a mold for molding the cylindrical object with a prescribed size and curing the raw material at a prescribed temperature other than the foregoing step; and

(3) a step of fitting the cylindrical object for the outer layer of the step (2) on the roll core having the fiber-reinforced underlayer, injecting an adhesive for resin roll assembly of the invention into the circular gap part formed between the underlayer and the cylindrical object, and curing the adhesive by increasing temperature gradationally from a low temperature to stick and unit the underlayer and the cylindrical object through the adhesive layer.

Further, the invention is applicable to resin roll manufacture by fitting the cylindrical object for an outer layer of the step (2) on a roll core while eliminating above-mentioned step (1) and injecting an adhesive for resin roll assembly of the invention into the circular gap part formed between the roll core and the cylindrical object, and curing the adhesive by increasing temperature gradationally from a low temperature to stick and unit the roll core and the cylindrical object through the adhesive layer.

The number of the curing steps is generally 2 to 10, preferably 2 to 5, and more preferably 2. This method is described in, for example, Japanese Patent Application Laid-Open No. 1-260092. The adhesive for resin roll assembly of the invention is used in the step (3). Incidentally, these gradational curing does not include a step of heating for the purpose to carry out aging and the like further after the final stage at a lower temperature than the curing temperature in the final stage.

For the roll core of the invention, metals such as an iron, a copper, a stainless steel, an aluminum and the like are used.

As the fibrous material of the invention, any of inorganic fibers and organic fibers may be used, and for example, glass fibers, carbon fibers, metal fibers and the like may be used.

The thermosetting resin to impregnate the fibrous material of the invention includes, for example, an epoxy resin, an unsaturated polyester resin, a diallyl phthalate resin and the like. The thermosetting resin includes both of heat curing type and room temperature curing type.

As the thermosetting resin for forming the cylindrical object for an outer layer, those exemplified above can be included.

The adhesive for resin roll assembly of the invention has a curing temperature (T1) of the first curing step in 10 to 50°C and the temperature (Tg1) showing the inflection point of the storage elastic modulus in the viscoelasticity spectrum of the cured material after the first step curing is preferable to satisfy the following formula (2). The curing temperature is preferably 10 to 50°C and further preferably 20 to 40°C. If the curing temperature is 50°C or lower, the volume expansion of the cylindrical object by heat is not significant and the residual stress is also not high on completion of the curing. If it is 10°C or higher, the viscosity is not increased and therefore, bubbles are not entrained at the time of injection and the curing time is not prolonged and that is convenient for the practical use. Further, in the case the adhesive of the invention satisfies the formula (2), at the time of increasing the temperature to the next curing temperature, the adhesive is hardly softened or fluidized and therefore preferable.

$$(Tg1) \geq (T1) + 15 \qquad\qquad (2)$$

[In the formula, T1 denotes the curing temperature of the first step.

One example of a method for measuring the temperature showing the inflection point of the storage elastic modulus will be described below.

[Dynamic viscoelasticity measurement method]

Using a Leovibron DDV-25FP (manufactured by A & D Co., a dynamic viscoelasticity measurement apparatus), a temperature (Tg1 and the following Tgf) showing an inflection point of a storage elastic modulus in a viscoelasticity spectrum is measured in conditions of tensile mode, weight application of 50 kgf, vibration frequency of 10 Hz, and a temperature range of 30 to 200°C.

The adhesive for resin roll assembly of the invention preferably has a curing reaction ratio (R) of 70% or higher, more preferably 80% or higher, in the first curing step. Here, the curing reaction ratio (R) can be calculated from the reaction heat before and after the reaction measured by, for example, differential scanning calorimetry (DSC) and expressed as the following general formula (3). That is, the ratio can be calculated by dividing the remainder of subtraction of the curing reaction heat (Q2) from the total reaction heat by (Q1) defined as the reaction heat of a blend immediately after mixing a base agent and a curing agent and multiplying the quotient by 100.

$$R\ (\%) = ((Q1 - Q2)/\ Q1) \times 100 \qquad\qquad (3)$$

If R calculated in such a manner is 70% or higher, shrinkage by reaction is almost all finished and at the same time mechanical strength is exhibited, so that the adhesive has the resistance against the thermal expansion of the cylindrical object and even in the case of cooling after complete curing by further increasing the curing temperature thereafter, the strain of the resulting resin roll is scarce and the residual stress is almost zero.

In the invention, the curing temperature of the adhesive in the final step is preferably 50 to 150°C and as exemplified in Japanese Patent Application Laid-Open No. 1-260092, it is further preferably same as the practical roll running temperature and it furthermore preferably satisfies the following general formula (1). If Tgf is Tf + 15 or higher, the mechanical strength of the adhesive at the time of running a roll does not decrease and no cracking and damaging takes place and therefore it is preferable.

$$Tgf \geq Tf + 15 \tag{1}$$

[In the formula, Tf denotes the curing temperature in the final step.]

The adhesive for resin roll assembly of the invention comprises an epoxy resin (a) and an amine-based curing agent (b).

As the epoxy resin (a), those having 2 to 10 epoxy groups in a molecule can be properly selected depending on the use and purposes without any limitation. Preferable ones are those having 2 to 6 epoxy groups in a molecule and the epoxy equivalent of the epoxy resin (the molecular weight per one epoxy group) is generally 65 to 500 and preferably 90 to 300. If the epoxy equivalent is 500 or lower, the cross-linking structure is not loose and desirable physical properties of such as heat resistance, mechanical strength and the like are obtained, whereas if the epoxy equivalent is 65 or higher, the toughness of a cured product becomes high. Examples of the epoxy resin may be same as those described in, for example, Japanese Patent Application No. 11-256623 and the following as described in 1) to 7) can be exemplified.

1) Glycidyl ethers

(i) diglycidyl ethers of dihydric phenols
diglycidyl ethers of diphenols of 6 to 30 carbons such as bisphenol F diglycidyl ether, bisphenol A diglycidyl ether, dichlorobisphenol A diglycidyl ether, tetrachlorobisphenol A diglycidyl ether, catechin diglycidyl ether, resorcinol diglycidyl ether, tetramethylbiphenyl diglycidyl ether, diglycidyl ether obtained by 2 mole of bisphenol A and 3 mole of epichlorohydrine, and the like;

(ii) polyglycidyl ethers of 3 to 6 functional or higher polyhydric phenols polyglycidyl ethers of tri to hexa or higher polyhydric phenols of 6 to 50 carbons or more and having a molecular weight of 250 to 5,000 such as pyrogallol triglycidyl ether, dihydroxynaphthylcresol triglycidyl ether, tris(hydroxyphenyl)methane triglycidyl ether, dinaphthyltriol triglycidyl ether, tetrakis(4-hydroxyphenyl)ethane tetraglycidyl ether, p-glycidylphenyldimethyltolylbisphenol A glycidyl ether, trismethyl-tert-butyl-butylhydroxymethane triglycidyl ether, glycidyl ether of phenol or cresol novolak resin, glycidyl ether of limonene phenol novolak resin, polyglycidyl ether of polyhydric phenols with a molecular weight of 400 to 5,000 and obtained by condensation reaction of resorcin and acetone, and the like;

(iii) diglycidyl ethers of bifunctional aliphatic alcohols
diglycidyl ethers of diols with 2 to 100 carbons and a molecular weight of 150 to 5,000 such as ethylene glycol diglycidyl ether, propylene glycol diglycidyl ether, butylene glycol diglycidyl ether, 1,6-hexanediol diglycidyl ether, polyethylene glycol (molecular weight of 150 to 4,000) diglycidyl ether, polypropylene glycol (molecular weight of 180 to 5,000) diglycidyl ether, polytetramethylene glycol (molecular weight of 200 to 5,000) diglycidyl ether, neopentyl glycol diglycidyl ether, diglycidyl ether of bisphenol A alkylene oxide [2 to 4 carbons, for example ethylene oxide or propylene oxide (1 to 20 mole)] addition product and the like; and

(iv) polyglycidyl ethers of trihydric to hexahydric or higher polyhydric aliphatic alcohols
glycidyl ethers of trihydric to hexahydric or higher polyhydric alcohols with 6 to 50 carbons and a molecular weight of 290 to 10,000 such as trimethylol propane triglycidyl ether, glycelol triglycidyl ether, pentaerythritol tetraglycidyl ether, sorbitol hexaglycidyl ether, poly(n = 2 to 5) glycelol polyglycidyl ether, and the like.

2) Glycidyl esters

Glycidyl esters of aromatic mono or polycarboxylic acid having 6 to 20 carbons and mono to hexa or higher functional groups and glycidyl esters of aliphatic or alicyclic mono or polycarboxylic acid having 6 to 20 carbons and mono to hexa or higher functional groups can be exemplified. Practical examples are as follows:

(i) glycidyl esters of phthalic acids

phthalic acid diglycidyl ester, isophthalic acid diglycidyl ester, terephthalic acid diglycidyl ester and the like;
(ii) glycidyl esters of aliphatic or alicyclic mono or polycarboxylic acids

hydrogenated products of the aromatic nuclear of the above-mentioned phenolic glycidyl esters, dimer acid diglycidyl ester, diglycidyl oxalate, diglycidyl maleate, diglycidyl succinate, diglycidyl glutarate, diglycidyl adipate, diglycidyl pimelate, glycidyl (meth)acrylate (co)polymers, glycidyl esters of fatty acids (8 to 30 carbons) and the like;

3) Glycidylamines

Glycidylamines of aromatic amines and glycidylamines of aliphatic amines with 6 to 20 carbons and mono to deca or higher functional groups;

(i) glycidylamines of aromatic amines

N,N-diglycidylaniline, N,N-diglycidyltoluidine,
N,N,N',N'-tetraglycidyldiaminodiphenylmethane,
N,N,N',N'-tetraglycidyldiaminodiphenylsulfone,
N,N,N',N'-tetraglycidyldiethyldiphenylmethane, N,N,O-triglycidylaminophenol, and the like; and
(ii) glycidylamines of aliphatic amines

N,N,N',N'-tetraglycidylxylylenediamine and hydrogenated products of the aromatic nuclear of it, N,N,N',N'-tetraglycidylhexamethylenediamine, trisglycidylmelamine, and the like.

4) Other acyclic aliphatic epoxides

Epoxylated polybutadiene, epoxylated soybean oil and the like.

5) Other alicyclic epoxides

Alicyclic epoxides with 6 to 50 carbons or more, a molecular weight of 90 to 2,500 and 1 to 4 epoxy groups such as vinylcyclohexene dioxide, limonene dioxide, dicyclopentadiene dioxide, bis(2,3-epoxycyclopentyl) ether, ethylene glycol bisepoxydicyclopentyl ether, 3,4-epoxy-6-methylcyclohexylmethyl 3',4'-epoxy-6'-methylcyclohexanecarboxylate, bis(3,4-epoxy-6-methylcyclohexylmethyl) adipate, bis(3,4-epoxy-6-methylcyclohexylmethyl)butylamine and the like. Further, hydrogenated products of the nuclear of the above-mentioned epoxy compounds of the phenols are also included.

6) Urethane-modified epoxy resin having urethane bonds in the structure

Reaction products of polyether urethane oligomers and glycidols can be exemplified.

7) Epoxy resins comprising acrylonitrile-butadiene rubber (NBR), carboxyl-terminated butadiene-acrylonitrile copolymer (CTBN), amino-terminated butadiene-acrylonitrile copolymer (ATBN), or silicone rubber dispersed in the resin matrix.

Other than those described in 1) to 7), epoxy resins having two or more glycidyl groups reactive with active hydrogen of amines may be used.
Among them, glycidyl ethers and glycidyl amines are preferable and diglycidyl ethers of bifunctional phenols and diglycidyl ethers of aliphatic alcohols are especially preferable. Two or more kinds of these epoxy resins can be used in combination and combinations of glycidyl ethers of bifunctional phenols and glycidyl amines are especially preferable. The mixing ratio of the glycidyl ethers and glycidyl amines is (30 : 70) to (90 : 10) by weight and most preferably (60 : 40) to (90 : 10). If the ratio of glycidyl ethers is 30 or higher, the heat resistance is high and if the ratio is 90 or lower, the usable duration can be surely maintained and therefore, it is preferable.
As the amine-based curing agent (b) to be employed as the curing agent of the invention, one or more kinds of amines selected from a group consisting of alicyclic polyamines, heterocyclic polyamines, polyamide-polyamines having a molecular weight of 800 or lower, polyether polyamines having a molecular weight of 1,000 or lower, and cyanoethylated polyamines. They may be properly selected depending on the use and purposes. Practically, the following can be exemplified.

(1) alicyclic polyamines (C4 to C15): for example, 1,3-diaminocyclohexane, isophoronediamine, menthanediamine, 4,4'-methylenedicyclohexanediamine, 4,4-diaminodicyclohexane, 3,3'-dimethyl-4,4'-diaminodicyclohexane (hydrogenated methylenedianiline) and the like;

(2) heterocyclic polyamines (C4 to C15): for example, piperazine, N-aminoethylpiperazine, 1,4-diaminoethylpiperazine and the like;

(3) polyamide-polyamines having a molecular weight of 800 or lower [e.g. lower molecular weight polyamide-polyamines obtained by condensation of dicarboxylic acid (dimer acids and the like) and excess amounts (2 mole or more per 1 mole acid) of polyamines (the above-mentioned alkylenediamine, polyalkylene polyamine and the like)] and the like;

(4) polyether polyamines having a molecular weight of 1,000 or lower [hydrogenated products of cyanoethyl compounds of polyether polyols (polyalkylene glycol and the like)]; and

(5) cyanoethylated polyamines [e.g. cyanoethylated polyamines obtained by addition reaction of acrylonitrile and polyamines (the above-mentioned alkylenediamine, polyalkylene polyamine and the like) such as biscyanoethyl diethylenetriamine and the like] and they may be used solely or in form of mixtures of one or more kinds. Amine-based curing agents preferable among them are those having a viscosity of 1 to 500 mPa•s at 25°C and in terms of the curing property, those exemplified in above-mentioned (1), (4), and (5) are preferable and among them, those exemplified in the above-mentioned (1) are especially preferable, and in terms of the heat resistance and the mechanical strength, those exemplified in the above-mentioned (1) are most preferable.

Further, the following aromatic amines of 6 to 20 carbons may be used in combination of other amines mentioned above. The amount of the aromatic amines is preferably 30 parts by weight or less to the total of the amine-based curing agent. If it is 30 parts by weight or less, the viscosity does not become too high and the curing property is excellent without a problem. As the aromatic amines, the following (i) to (iv) can be exemplified.

(i) unsubstituted aromatic polyamines

2-, 1,3- and 1,4-phenylenediamine, 2,4'- and 4,4'-diphenylmethanediamine, crude diphenylmethanediamine [polyphenylpolylmethylenepolyamine], diaminodiphenylsulfone, benzidine, thiodianiline, bis(3,4-diaminophenyl) sulfone, 2,6-diaminopyridine, m-aminobenzylamine, tripheylmethane-4,4',4"-triamine, naphthylenediamine and the like;

(ii) aromatic polyamines containing alkyl (C1 to C4 alkyl such as methyl, ethyl, n- and iso-propyl, butyl and the like)-substituted nucleus

2,4- and 2,6-tolylenediamine, crude tolylenediamine, diethyltolylenediamine,
4,4'-diamino-3,3'-dimethyldiphenylmethane, 4,4'-bis(o-toluidine), dianisidine,
diaminoditolylsulfone, 1,3-dimethyl-2,4-diaminobenzene,
1,3-diethyl-2,4-diaminobenzene, 1,3-dimethyl-2,6-diaminobenzene,
1,4-diethyl-2,5-diaminobenzene, 1,4-diisopropyl-2,5-diaminobenzene,
1,4-dibutyl-2,5-diaminobenzene, 2,4-diaminomesitylene,
1,3,5-triethyl-2,4-diaminobenzene, 1,3,5-triisopropyl-2,4-diaminobenzene,
1-methyl-3,5-diethyl-2,4-diaminobenzene, 1-methyl-3,5-diethyl-2,6-diaminobenzene,
2,3-dimethyl-1,4-diaminonaphthalene, 2,6-dimethyl-1,5-diaminonaphthalene,
2,6-diisopropyl-1,5-diaminonaphthalene, 2,6-dibutyl-1,5-diaminonaphthalene,
3,3',5,5'-tetramethylbenzidine, 3,3',5,5'-tetraisopropylbenzidine,
3,3',5,5'-tetramethyl-4,4'-diaminodiphenylmethane,
3,3',5,5'-tetraethyl-4,4'-diaminodiphenylmethane,
3,3',5,5'-tetraisopropyl-4,4'-diaminodiphenylmethane,
3,3',5,5'-tetrabutyl-4,4'-diaminodiphenylmethane,
3,5-diethyl-3'-methyl-2',4-diaminodiphenylmethane,
3,5-diisopropyl-3'-methyl-2',4-diaminodiphenylmethane,
3,3'-diethyl-2,2'-diaminodiphenylmethane,
4,4'-diamino-3,3'-dimethyldiphenylmethane,
3,3',5,5'-tetraethyl-4,4'-diaminobenzophenone,
3,3',5,5'-tetraisopropyl-4,4'-diaminobenzophenone,
3,3',5,5'-tetraethyl-4,4'-diaminodiphenyl ether, and
3,3',5,5'-tetraisopropyl-4,4'-diaminodiphenylsulfone; and mixtures of their isomers in a variety of ratios;

(iii) aromatic polyamines containing nucleus-substituting electron attractive group (halogen such as Cl, Br, I, F and the like; alkoxy group such as methoxy, ethoxy and the like; nitro group, and the like)

methylenebis(o-chloroaniline), 4-chloro-o-phenylenediamine,
2-chloro-1,4-phenylenediamine, 3-amino-4-chloroaniline,
4-bromo-1,3-phenylenediamine, 2,5-dichloro-1,4-phenylenediamine,
5-nitro-1,3-phenylenediamine, 3-dimethoxy-4-aminoaniline;

4,4'-diamino-3,3'-dimethyl-5,5'-dibromo-diphenylmethane, 3,3'-dichlorobenzidine, 3,3'-dimethoxybenzidine, bis(4-amino-3-chlorophenyl)oxide, bis(4-amino-2-chlorophenyl)propane, bis(4-amino-2-chlorophenyl)sulfone, bis(4-amino-3-methoxyphenyl)decane, bis(4-aminophenyl)sulfide, bis(4-aminophenyl)telluride, bis(4-aminophenyl)selenide, bis(4-amino-3-methoxyphenyl)disulfide, 4,4'-methylenebis(2-iodoaniline), 4,4'-methylenebis(2-boromoaniline), 4,4'-methylenebis(2-fluoroaniline), 4-aminophenyl-2-chloroaniline and the like;

(iv) aromatic polyamines having secondary amino group [those obtained by replacing a part or all of -NH2 of the above-mentioned aromatic polymines with -NH-R'(R' denotes an alkyl, for example, a lower alkyl such as methyl, ethyl, and the like.)]

for example, 4,4'-di(methylamino)diphenylmethane, 1-methyl-2-methylamino-4-aminobenzene and the like.

The ratio of (a) to (b) is generally 0.7 to 1.5 equivalent, preferably 0.8 to 1.2 equivalent, of active hydrogen of (b) to one epoxy equivalent of (a). If it is not lower than 0.7 and not higher than 1.5, deterioration of heat resistance and mechanical strength owing to curing failure or un-reacted compounds does not take place.

To the adhesive for resin roll assembly of the invention, fillers may be added for purposes to improve the functional properties such as strength, elastic modulus and the like, physical properties such as durability, conductivity, thermal conductivity and the like, and forming processibility such as fluidity and shrinkage property and further economical advantages such as increase in amount and saving of resources.

Inorganic and organic fillers are available and any can be used. As the inorganic fillers, alumina, glass beads, wallastonite, acid clay, iron oxide, silica, lead chromate, nickel slag, aluminum hydroxide, calcium carbonate, carbon black, clay, talc, titanium oxide, quick lime, kaolin, zeolite, kieselguhr and the like can be exemplified. As the organic fillers, coal tar, polyethylene powder, powdered fiber, vinyl chloride paste resin, vinylidene chloride resin balloon and the like can be exemplified. From a viewpoint of the strength and inner stress, the inorganic fillers are preferable and silica, acid clay, and carbon black are especially preferable. These fillers may be used solely or in form of mixtures and the use amount is generally 10 to 110 parts by weight, preferably 20 to 90 parts by weight, especially preferably 40 to 80 parts by weight to 100 parts by weight of resin. If it is 10 parts by weight or more, the resin strength is improved and if it is 110 parts by weight or less, the inner stress owing to the fillers is not increased and further the viscosity is neither increased, so that the injection is easily carried out. These fillers may be used in combination of two or more without any limitation.

Curing promoting agents for adjusting the curing speed may be added to the adhesive of the invention. Examples of the agents are bisphenol A, bisphenol F, phenol, alkylphenol, catechol, resorcin, hydroquinone, xylenol, salicylic acid, methyl toluenesulfonate, and the like. In the case of adding them, the content in the composition is generally 0 to 10 parts by weight and preferably 0 to 5 parts by weight in 100 parts of the entire composition.

Additionally, to the composition of the invention, a variety of additives may be added and for example, antioxidants (hindered amines, hydroquinones, hindered phenols, sulfur-containing compounds and the like), silane coupling agents, defoaming agents (alcohol type, mineral oil type, silicone type, a variety of surfactants and the like), thixotropic agents (inorganic type such as bentonite type, organic type such as hydrogenated castor oil, wax, calcium stearate and the like), precipitation preventing agents (organic type such as polycarboxylic acid salt, inorganic type such as magnesium silicate and the like) may be added. In the case of adding them, the content in the composition is generally 0 to 3 parts by weight in 100 parts of the entire composition.

The adhesive for resin roll assembly of the invention is generally composed of two liquids of a base agent containing (a) and a curing agent containing (b) and the above-mentioned fillers, curing promoting agents, and other additives may be added any of the component of a base agent and the component of a curing agent. They may be mixed and produced respectively according to conventional methods and generally they can be obtained as follows.

That is, in the case of the base agent, prescribed amounts of the above-mentioned components (the component of a base agent and fillers and the like) are charged generally to a mixing and stirring apparatus for high viscosity and stirred at 20°C to 150°C, preferably 20°C to 100°C, to obtain an aimed base agent. The obtained base agent is generally a liquid mixture with a viscosity of 10 to 15,000 mPa•s at 25°C.

Meanwhile, in the case of the curing agent, prescribed amounts of the above-mentioned components (the component of a curing agent and curing promoting agents and the like) are charged generally to a mixing and stirring apparatus and stirred at 20°C to 150°C, preferably 50°C to 100°C, to obtain an aimed curing agent. The obtained curing agent is generally a liquid mixture with a viscosity of 1 to 500 mPa•s at 25°C.

The base agent and the curing agent obtained in such manners are mixed generally by three rolls at a room temperature or if necessary, while being heated to obtain the adhesive for resin roll assembly of the invention. The adhesive has a viscosity of preferably 5,000 mPa•s or lower at 25°C and more preferably 3,000 mPa•s or lower at 25°C.

The adhesive is injected in the space between a cylindrical object made of a resin and either a roll core or a fiber-reinforced underlayer formed by winding a fibrous material impregnated with a thermosetting resin on the outer periphery of a roll core by a conventional method. The injection temperature is not particularly limited, however it is preferably 20 to 60°C. If it is 60°C or lower, no gelling takes place before the completion of the injection of the adhesive and therefore sufficient use time can be assured. On the other hand, if it is 20°C or higher, the viscosity is low and therefore, the injection speed does not slow down or no bubble is entrained.

The curing temperature of the adhesive is preferably 10 to 50°C and more preferably 20 to 40°C. Regarding the curing time, in order to increase the reaction ratio, it is preferably 5 to 30 hours and more preferably 8 to 20 hours in the first step and it is preferably 2 to 30 hours and more preferably 5 to 12 hours in the second step or thereafter. The adhesive cured product obtained in such a manner satisfies the above-mentioned conditions.

(Resin roll)

The adhesive for resin roll assembly of the invention is excellent in the injection property and the curing property and capable of suppressing the strain on a resin roll and at the same time excellent also in the compressive property, adhesion property, heat resistance, and impact resistance, so that cracking or damaging hardly takes place in the adhesive layer and the surface of the resin roll even under a high temperature and high nip pressure. The compressive strength of the obtained resin roll is preferably 100 to 150 MPa and Tgf is preferably 100 to 180°C at 25°C.

Examples

Hereinafter, the invention will be described more particularly with reference to examples, however the invention is not limited to these examples. The word, part, in the descriptions means part by weight.

Production example 1

To a container of 2 L capacity made of glass, 80 parts of EPIKOTE 828 (produced by Yuka Shell Epoxy K.K.; bisphenol A type epoxy resin), 20 parts of GOT (produced by Nippon Kayaku Co., Ltd.; glycidyl-o-toluidine) were added and stirred at 80°C for 30 minutes to obtain a pale yellowish transparent liquid with a viscosity of 3,000 mPa•s (25°C). The obtained product was named as a base agent (1).

Production example 2

Eighty parts of EPIKOTE 828, 10 parts of GOT, and 10 parts of GAN (produced by Nippon Kayaku Co., Ltd.; N,N-diglycidylaniline) were added and a pale yellowish transparent liquid with a viscosity of 3,300 mPa•s (25°C) was obtained in the same manner as the production example 1. The obtained product was named as a base agent (2).

Production example 3

Seventy parts of EPIKOTE 828, 20 parts of GOT, and 10 parts of ELM-100 (produced by Sumitomo Chemical Co. Ltd.; triglycidyl-p-alkylaminophenol) were added and a pale brown transparent liquid with a viscosity of 2,500 mPa•s (25°C) was obtained in the same manner as the production example 1. The obtained product was named as a base agent (3).

Production example 4

In a container of 2 L capacity made of glass, 47 parts of PACM-20 (produced by San-Apro Ltd.; 4,4-diaminodicyclohexane) and 53 parts of ANCAMINE 2049 (produced by Air Product Co.; 3,3'-dimethyl-4,4'-diaminodicyclohexane) were added to a mixing and stirring apparatus for a middle viscosity and stirred and evenly dissolved at 50°C for 30 minutes to obtain a pale pink transparent liquid with a viscosity of 85 mPa•s (25°C). The obtained product was named as a curing agent (1).
Further, the PACM-20 was used as a curing agent (2). The viscosity was 65 mPa•s (25°C).

Production example 5

Fifty parts of KAYAHARD A-A (produced by Nippon Kayaku Co., Ltd.; 2,2'-diethyl-4,4'-diaminodiphenylmethane) and 50 parts of MDA-150 (produced by Mitsui Chemicals, Inc.; diaminodiphenylmethane) were added to a mixing and stirring apparatus for a high viscosity and stirred and dissolved at 80°C and 760 mmHg for 60 minutes to obtain a brown liquid with a viscosity of 4,000 mPa•s (25°C). The obtained product was named as a curing agent (3).

Example 1

The base agent (1), the curing agent (1), and CRISTALITE VX-Z (produced by Tsuchiya Kaolin Co.; silica with an average particle size of 2.75 μm) were mixed in a mixing ratio as shown in Table 1 and added to a mixing and stirring apparatus and sufficiently stirred to obtain an adhesive. Next, the above-mentioned adhesive was injected to an injection plate of 4 mm × 150 mm × 150 mm made of glass at a curing temperature of the first step and the agent was cured under the conditions shown in Table 1 in the final step, and Tg1 and Tgf, and the curing reaction ratio were measured by the following methods. The results were shown in Table 1.

[Method for measuring Tg1 and Tgf]

Measurement was carried out according to the above-mentioned dynamic viscoelasticity measurement method.

[Method for measuring curing reaction ratio]

Using TAC7/DX (manufactured by Parkin Elmer Co., Ltd.; differential scanning calorimeter), the reaction heat was measured at a temperature increase rate of 5°C/minute in a temperature measurement range of 20 to 300°C. The curing reaction ratio (R) was calculated based on the above-mentioned formula (3).

Examples 2, 3 and Comparative Example 1

The base agents and the curing agents were mixed and cured as shown in Table 1 and in the same manner as the example 1, Tg1 and Tgf of the respective examples 2, 3 and comparative example 1 were measured. The results were shown in Table 1.

[Table 1]

| | | Example 1 | Example 2 | Example 3 | Comparative Example 1 |
|---|---|---|---|---|---|
| Composition | Base agent (1) | 100 | | | 100 |
| | Base agent (2) | | 100 | | |
| | Base agent (3) | | | 100 | |
| | Curing agent (1) | 32 | 33 | | |
| | Curing agent (2) | | | 34 | |
| | Curing agent (3) | | | | 33 |
| | Cristalite VX-Z | 70 | 70 | 70 | 70 |
| First step | Curing condition | 35°C × 12h | 35°C × 12h | 35°C × 12h | 35°C × 12h |
| | Initial viscosity (mPa·s/ 35°C) | 2100 | 2500 | 1850 | 6000 |
| | Tg1(°C) | 60 | 57 | 65 | No gelling |
| | Curing reaction ratio (%) | 82 | 80 | 85 | 38 |
| Final step | Curing condition (°C) | 80°C × 10h | 80°C × 10h | 80°C × 10h | 80°C × 10h |
| | Tgf(°C) | 108 | 110 | 107 | 90 |

Regarding the examples 1 to 3 and the comparative example 1, the compressive strength, the compressive elastic modulus, and Charpy impact strength of the cured products after the final step curing were measured as the methods described below. The results were shown in Table 2.

[Method for measuring compressive strength and compressive elastic modulus]

The compressive strength and the compressive elastic modulus were measured at 25°C using Autograph (manufactured by Shimadzu Corporation; an Instron-type tensile test machine) according to JIS K7208, Method for Compressive Test of Plastics.

[Method for measuring Charpy impact strength]

The Charpy impact strength was measured at 25°C using Autograph according to JIS K7111, Method for Charpy Impact Strength Test of Hard Plastics (unnotched).

[Table 2]

| | | Example 1 | Example 2 | Example 3 | Comparative Example 1 |
|---|---|---|---|---|---|
| Physical property of cured product | Compressive strength (MPa) | 139 | 137 | 140 | 135 |
| | Compressive elastic modulus (MPa) | 3100 | 3500 | 3800 | 3100 |
| | Charpy impact strength (Kl/m$^2$) | 20 | 21 | 20 | 15 |

As being made clear from Table 1 and Table 2, the adhesives for resin roll assembly of the invention were found to have a significantly low viscosity and sufficiently high compressive resistance and compressive properties as compared with those of a conventional adhesive.

Examples 4 to 6

The outer periphery of each roll core having 4,722 mm length and 480 mm diameter in size was surface-roughened by sand blast and a fibrous material impregnated with an epoxy resin was wound around the outer periphery of each roll core to form a 6 mm-thick fiber-reinforced underlayer. In this case, as the epoxy resin, a mixture of 120 parts by weight of a base agent and 40 parts by weight of a silica powder with a particle size of 44 μm or smaller was used. In this case, the fibrous material was a material obtained by winding a glass cloth tape impregnated with an epoxy resin mixed with a silica powder on the periphery of a roll core and winding a glass roping impregnated with a similar epoxy resin in the outer periphery of the tape layer. The epoxy resin was cured at 110°C.
Next, besides the above-mentioned process, an epoxy resin raw material mixed similarly with a silica powder was injected in a mold for molding a cylindrical object and cured at 150 to 160°C to produce a cylindrical object for outer layer with a length of 3470 mm, an outer diameter of 542 mm, and a thickness of 25 mm.
The adhesives of the examples 1 to 3 were injected to the space between each cylindrical object made of the resin and each fiber-reinforced underlayer and cured in conditions of 35°C × 12 h in the first step and 80°C × 10 h in the second step (the final step) to assemble a resin roll and each assembled roll was used as a paper manufacturing calender roll intermittently for 3 weeks under conditions of a linear pressure of 200 kg/cm$^2$ and a rotation speed of 800 m/minute. As a result, any roll of the examples 4 to 6 showed no peeling or cracking in the adhesive layer, the interface between the resin roll and the adhesive, and the interface between the adhesive and the fiber-reinforced underlayer and neither scratches nor cracks were formed on the surface of each resin roll.

Comparative Example 2

For comparison, an adhesive of the comparative example 1 was injected in the space between the cylindrical object made of the resin and the fiber-reinforced underlayer and cured under the same conditions as those of the examples 4 to 6 and the obtained roll was used as a paper manufacturing calender roll. As a result, hair cracks were formed in several points of the surface of the resin roll at the time of cooling to a room temperature on the completion of the operation of the first day and the third day. That is supposedly attributed to that the adhesive was cured in the state the cylindrical object was thermally expanded, and consequently the residual inner stress of the resin roll became too high to follow the heat history.

INDUSTRIAL APPLICABILITY

An adhesive for resin roll assembly of the invention has the following excellent effects;

(1) it is excellent in workability and curing properties; and

(2) it is excellent in compressive characteristics when cured and also excellent in the impact resistance, so that the probability of occurrence of cracking and damaging on an adhesive layer and a surface layer of a resin roll can be significantly decreased.

Consequently, a resin roll using an adhesive for resin roll assembly of the invention can be remarkably advantageously useful for a paper manufacturing calendar roll, a water draining roll, a rolling roll and further for a resin injection molded product and a FRP material.

## Claims

1. Use of an adhesive for resin roll assembly to be used by being injected into a space between a cylindrical object made of a resin and either a roll core or a fiber-reinforced underlayer formed by winding a fibrous material impregnated with a thermosetting resin on the outer periphery of a roll core and then being gradationally cured to unite the cylindrical object to the roll core or the underlayer; said adhesive comprising an epoxy resin (a) and one or more amine compound-based curing agents (b) selected from the group consisting of aliphatic polyamines, alicyclic polyamines, heterocyclic polyamines, polyamide-polyamines having a number average molecular weight of 800 or lower, polyether polyamines having a number average molecular weight of 1,000 or lower, and cyanoethylated polyamines.

2. Use as claimed in claim 1, wherein said curing agent (b) is an aliphatic polyamine and/or an alicyclic polyamine.

3. Use as claimed in claim 1, wherein said adhesive gives a final cured product having a temperature (Tgf) of the inflection point of the storage elastic modulus satisfying the following formula (1):

$$Tgf \geq Tf + 15 \qquad (1)$$

[in the formula, Tf denotes the curing temperature of the final step]

4. Use as claimed in claim 3, wherein said Tf is in a range of 50 to 150 °C.

5. Use as claimed in claim 1 or claim 3, wherein said adhesive gives a first-step cured product having a temperature (Tg1) of the inflection point of the storage elastic modulus satisfying the following formula (2):

$$Tg1 \geq T1 + 15 \qquad (2)$$

[in the formula, T1 denotes the curing temperature of the first step]

6. Use as claimed in claim 5, wherein said T1 is in a range of 10 to 50 °C.

7. Use as claimed in claim 5, wherein the curing reaction ratio (R) in said first step curing is 70 % or higher.

8. Use as claimed in claim 1, wherein said epoxy resin (a) is produced from a glycidyl ether of a dihydric phenol and a glycidylamine.

9. Use as claimed in claim 1, wherein said adhesive further contains a filler.

10. Use as claimed in claim 1, wherein said adhesive has a viscosity of 5,000 mPa•s or lower at 25 °C.

11. A resin roll obtained from the use and the steps according to claim 1 or claim 5.

12. A resin roll according to claim 11 giving a final cured product having a compressive strength of 100 to 150 MPa at 25°C and Tgf in a range of 100 to 180°C.

**Patentansprüche**

1. Verwendung eines Klebstoffes für eine Harzrollenanordnung zum Einspritzen in einen Raum zwischen einem aus Harz bestehenden zylindrischen Objekt und entweder einem Zylinderkern oder einer faserverstärkten Unterschicht, wobei die Unterschicht durch Herumwickeln eines mit wärmeaushärtendem Harz imprägnierten faserigen Materials um den Außenumfang eines Zylinderkerns geformt wird, und zur anschließenden stufenweisen Härtung um das zylindrische Objekt mit dem Zylinderkern oder der Unterschicht zu verbinden; wobei der Klebstoff einen Epoxidharz (a) und einen oder mehrere Abbindemittel auf Basis einer Aminverbindung (b) aufweist, ausgewählt aus der Gruppe bestehend aus aliphatischen Polyaminen, alizyklischen Polyaminen, heterozyklischen Polyaminen, Polyamide-Polyaminen mit einem zahlenmittleren Molekulargewicht von 800 oder weniger, Polyäther Polyaminen mit einem zahlenmittleren Molekulargewicht von 1 000 oder weniger, und cyanethylierten Polyaminen.

2. Verwendung nach Anspruch 1, **dadurch gekennzeichnet, dass** das Abbindemittel (b) ein aliphatisches Polyamin und/oder ein alizyklisches Polyamin ist.

3. Verwendung nach Anspruch 1, **dadurch gekennzeichnet, dass** der Klebstoff ein gehärtetes Endprodukt ergibt, dass am Wendepunkt des Elastizitätsmoduls eine Temperatur (Tgf) hat, die folgender Formel (1) genügt:

$$\text{Tgf} \geq \text{Tf} + 15 \tag{1}$$

[In der Formel bezeichnet Tf die Aushärtungstemperatur des letzten Schrittes]

4. Verwendung nach Anspruch 3, **dadurch gekennzeichnet, dass** die Tf in einem Bereich liegt, der von 50 bis 150 °C reicht.

5. Verwendung nach Anspruch 1 oder Anspruch 3, **dadurch gekennzeichnet**, das der Klebstoff nach dem ersten Schritt ein gehärtetes Produkt ergibt, das am Wendepunkt des Elastizitätsmoduls eine Temperatur (Tg1) hat, die folgender Formel (2) genügt:

$$\text{Tg1} \geq \text{T1} + 15 \tag{2}$$

[In der Formel bezeichnet T1 die Aushärtungstemperatur des ersten Schrittes]

6. Verwendung nach Anspruch 5, **dadurch gekennzeichnet, dass** die T1 in einem Bereich liegt, der von 10 bis 50 °C reicht.

7. Verwendung nach Anspruch 5, **dadurch gekennzeichnet, dass** das Reaktionsverhältnis des Abbindevorgangs (R) im ersten Schritt der Aushärtung 70% oder höher ist.

8. Verwendung nach Anspruch 1, **dadurch gekennzeichnet, dass** der Epoxid-Harz (a) aus einem zweiwertigen Phenolglycidylether und einem Glycidylamin hergestellt wird.

9. Verwendung nach Anspruch 1, **dadurch gekennzeichnet, dass** der Klebstoff ferner einen Füllstoff enthält.

10. Verwendung nach Anspruch 1, **dadurch gekennzeichnet, dass** der Klebstoff bei 25 °C eine Viskosität von 5 000 mPa.s oder weniger hat.

11. Harzrolle, wie sie durch die Verwendung und die Schritte nach Anspruch 1 oder Anspruch 5 entsteht.

12. Harzrolle nach Anspruch 11, die ein gehärtetes Endprodukt mit einer Druckkraft von 100 bis 150 MPa bei 25 °C und einer Tgf von 100 bis 180 °C ergibt.

**Revendications**

1. Utilisation d'une colle pour l'assemblage d'un cylindre en résine destinée à être injectée dans un espace entre un objet cylindrique en résine et soit un noyau de cylindre soit une sous-couche à renfort de fibre, formée par enroulement d'un matériau fibreux imprégné de résine thermodurcissable autour du pourtour extérieur d'un noyau de cylindre, et à être ensuite graduellement durcie pour solidariser l'objet cylindrique au noyau de cylindre ou à la sous-couche ; ladite colle comportant une résine époxyde (a) et un ou plusieurs agents durcissants à base d'un composé d'amines (b) choisi parmi les polyamines aliphatiques, les polyamines alicycliques, les polyamines hétérocycliques, les polyamides-polyamines ayant une masse moléculaire moyenne en nombre de 800 ou plus faible , les polyamines polyéthers ayant une masse moléculaire moyenne en nombre de 1 000 ou plus faible et les polyamines cyanoéthylées.

2.  Utilisation selon la revendication 1, *caractérisée en ce que* l'agent durcissant (b) est une polyamine aliphatique et/ou une polyamine alicyclique.

3.  Utilisation selon la revendication 1, *caractérisée en ce que* l'on obtient à partir de cette colle un produit durci final ayant une température (Tgf) au point d'inflexion du module d'élasticité correspondant à la formule suivante (1) :

$$Tgf \geq Tf + 15 \tag{1}$$

[dans la formule, Tf représente la température de durcissement de l'étape finale]

4.  Utilisation selon la revendication 3, *caractérisée en ce que* ladite Tf est comprise entre 50 et 150 °C.

5.  Utilisation selon la revendication 1 ou la revendication 3, *caractérisée en ce que* l'on obtient à partir de cette colle, après une première étape, un produit durci ayant une température (Tg1) au point d'inflexion du module d'élasticité correspondant à la formule suivante (2) :

$$Tg1 \geq T1 + 15 \tag{2}$$

[dans la formule, T1 représente la température de durcissement de la première étape]

6.  Utilisation selon la revendication 5, *caractérisée en ce que* cette T1 est comprise entre 10 et 50 °C.

7.  Utilisation selon la revendication 5, *caractérisée en ce que* le rapport de la réaction de durcissement (R) lors de la première étape est de 70% ou plus.

8.  Utilisation selon la revendication 1, *caractérisée en ce que* cette résine époxyde (a) est produite à partir d'un éther glycidylique de phénol dihydrique et une amine glycidylique.

9.  Utilisation selon la revendication 1, *caractérisée en ce que* la colle contient en plus une matière de remplissage.

10. Utilisation selon la revendication 1, *caractérisée en ce que,* à 25 °C, la colle a une viscosité de 5 000 mPa.s ou plus faible.

11. Cylindre en résine obtenu par l'utilisation et les étapes selon la revendication 1 ou la revendication 5.

12. Cylindre en résine selon la revendication 11 permettant d'obtenir un produit durci final ayant une force de compression de 100 à 150 MPa à 25 °C et une Tgf entre 100 et 180 °C.